# EUROPEAN PATENT SPECIFICATION

(11) **EP 3 715 232 B1**
(45) Date of publication and mention of the grant of the patent: **30.11.2022**
(21) Application number: 20165973.7
(22) Date of filing: 26.03.2020
(51) Int. Cl.: B62J 17/06

(54) **LID SUPPORT STRUCTURE**
DECKELTRAGSTRUKTUR
STRUCTURE DE SUPPORT DE COUVERCLE

(30) Priority: 28.03.2019 JP 2019062674
(43) Date of publication of application: 30.09.2020
(73) Proprietor: Honda Motor Co., Ltd., Minato-ku, Tokyo 107-8556 (JP)
(72) Inventor: OISHI, Kenichi, Wako-shi, Saitama 351-0193 (JP); NAGAYAMA, Masashi, Wako-shi, Saitama 351-0193 (JP)
(74) Representative: Feller, Frank

(56) References cited:
- EP-A1- 2 397 371
- EP-A1- 2 479 094
- EP-A2- 1 958 859
- EP-A2- 2 305 544
- WO-A1-2015/152836

## Description

### Technical Field

The present invention relates to a lid support structure.

### Background Art

There has been known a saddle-type vehicle such as a motorcycle, which is provided with a lid that is detachably attached to a cover covering a vehicle body. An emergency key cylinder used for unlocking a lock state of the vehicle can be accessed by detaching the lid. As an example of such a lid structure, JP-A-2017-007467 discloses a lid support structure in which a lid that is detachably attached to cover a recess of a vehicle body cover can be easily detached by pushing one end portion of the lid without using a screw, a hand-grip or the like. In the lid support structure disclosed in JP-A-2017-007467, a space is provided between the lid and the recess covered by the lid, and one end portion of the lid is pushed into the space, so that the other end portion of the lid is lifted and support by a locking portion at the other end portion is released.

WO 2015/152836 A1 discloses the features of the preamble of claim 1 and shows a lid support structure comprising: a vehicle body cover including a first opening and a second opening; and a lid configured to be detachably engaged with the vehicle body cover, wherein the lid includes a lid surface configured to close the first opening of the vehicle body cover; and an operation surface disposed to be operable through the second opening of the vehicle body cover, and wherein the lid is configured to be disengaged from the vehicle body cover by moving the operation surface, wherein the vehicle body cover includes a smoothly rounded appearance surface provided with the first and second openings, wherein a space below the appearance surface forms an inner side of the vehicle body cover.

In EP 2 397 371 A1, a second lid is removable through a first lid opening.

In EP 2 479 094 A1, a rear surface of a lid comprises closing/opening means and accessed through an opening.

In EP 2 305 544 A2, a lid is closed through a claw which is accessed from an opening.

In EP 1 958 859 A2, an opening of lids through the rear surface hook is operated through buttons of further holes in the front cover.

### Summary of Invention

### Technical Problem

In the lid support structure disclosed in JP-A-2017-007467, it is difficult to know which position of the lid should be pushed into the space to release the support by the locking portion. That is, operability is lower. This difficulty to know the position where the lid should be pushed may be resolved by, for example, adding a mark on the position where the lid should be pushed. However, in this case, the design of the lid and therearound may be deteriorated.

Accordingly, the present invention provides a lid support structure that has superior lid attachability and detachability without deteriorating a design thereof.

### Solution to Problem

According to an embodiment of the present invention, there is provided a lid support structure according to claim 1.

### Advantageous Effects of Invention

According to the present invention, since the operation surface for disengaging the lid from the vehicle body cover is provided at a position separated from the lid surface configured to close the first opening of the vehicle body cover, the lid support structure can have superior lid attachability and detachability without deteriorating the design around the first opening of the vehicle body cover and the lid surface of the lid.

### Brief Description of Drawings

Fig. 1 is a right side view showing a motorcycle that is a saddle-type vehicle according to the present invention.
Fig. 2 is an enlarged rear perspective view showing a main part of a vehicle body cover in a front part of a vehicle body in the motorcycle shown in Fig. 1.
Fig. 3 is an enlarged right side view showing the main part of the vehicle body cover in the front part of the vehicle body in the motorcycle shown in Fig. 1.
Fig. 4 is a partial exploded perspective view showing the main part of the vehicle body cover in the motorcycle shown in Fig. 1.
Fig. 5 is a perspective view showing a rear surface as viewed from a left front side of the vehicle in a state where a lid shown in Fig. 2 is attached.
Fig. 6 is a perspective view as viewed from a right rear side of the vehicle in the state where the lid shown in Fig. 2 is attached.
Fig. 7 is a perspective view as viewed from a left rear side of the vehicle in the state where the lid shown in Fig. 2 is attached.
Fig. 8 is a cross-sectional view taken along line A-A shown in Fig. 2.
Fig. 9 is a cross-sectional view taken along line C-C shown in Fig. 3.
Fig. 10 is a cross-sectional perspective view taken along line B-B shown in Fig. 2.

### Description of Embodiments

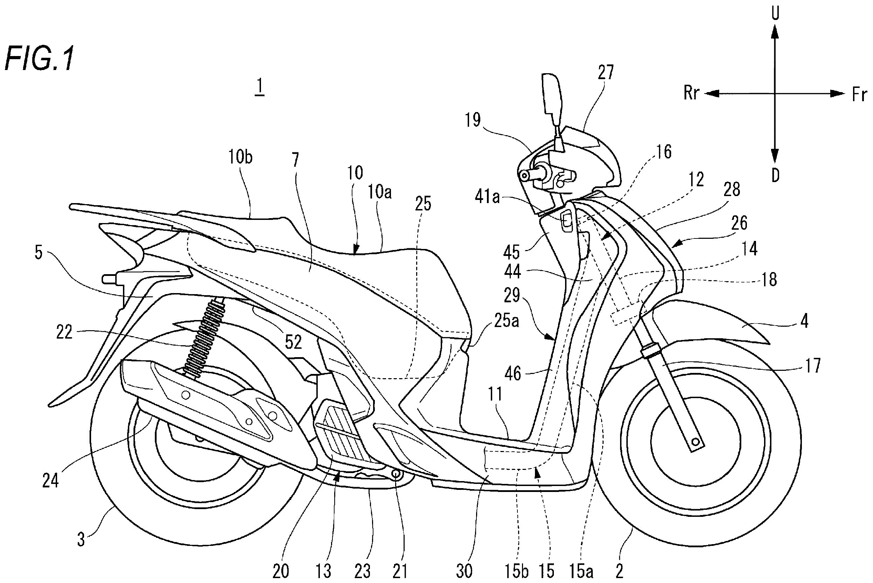

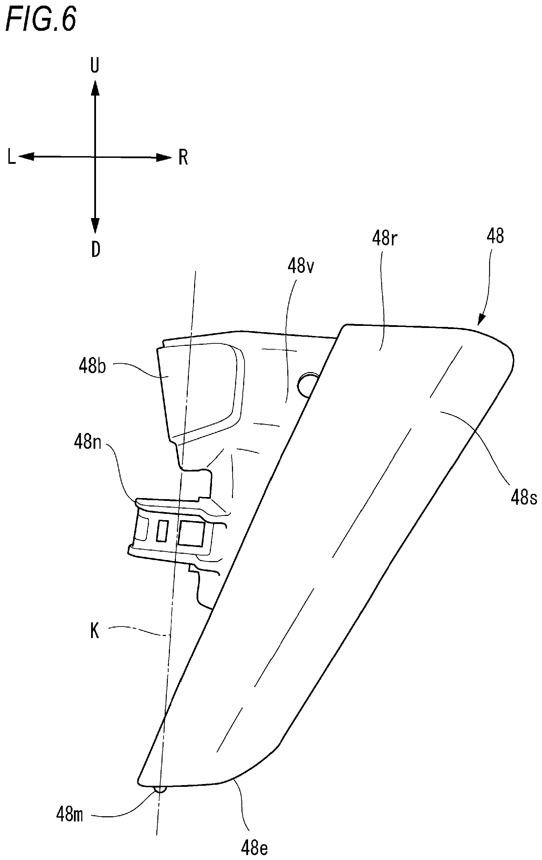

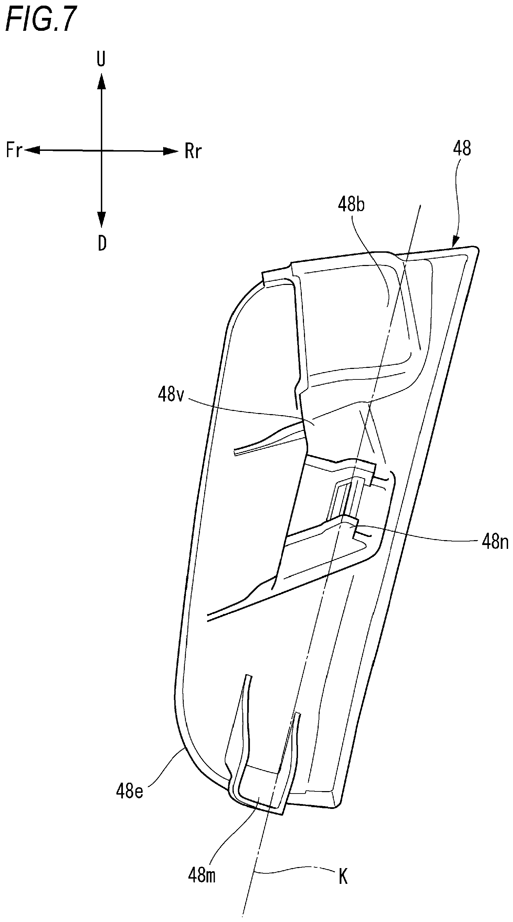

Hereinafter, a scooter-type motorcycle having a lid support structure according to an embodiment of the present invention will be described with reference to Figs. 1 to 10. The drawings should be seen based on directions of reference numerals. In the following description, front, rear, left, right, upper, and lower directions are described according to a view from a driver. In the drawings, a front side of the vehicle is denoted by Fr, a rear side is denoted by Rr, a left side is denoted by L, a right side is denoted by R, an upper side is denoted by U, and a lower side is denoted by D.

As shown in Fig. 1, a motorcycle 1 is a scooter saddle-type vehicle including a low step floor 11 where an occupant who sits on a seat 10 puts feet. The motorcycle 1 includes a front wheel 2 in front of a vehicle body frame 12 and a rear wheel 3 that is a driving wheel and is pivotally supported by a unit swing engine 13 provided in a rear part of the vehicle.

### Frame Structure of Vehicle

The vehicle body frame 12 includes a head pipe 14 provided at a front end of the vehicle body frame 12, a main frame 15 that extends downwards from the head pipe 14 and then extends backwards, and a seat frame (not shown) extending upward from a rear end of the main frame 15 up to a vehicle body rear end portion. The main frame 15 includes a down frame portion 15a extending downwards from a rear surface of the head pipe 14, and an under frame portion 15b extending rearward from a lower end of the down frame portion 15a.

A steering shaft 16 is pivotally supported in the head pipe 14. A pair of left and right front forks 17 are supported by a bridge 18 provided at a lower end of the steering shaft 16. A handle 19 operated by an occupant is provided at an upper end of the steering shaft 16. The front wheel 2 is supported by lower end portions of the front forks 17.

### Engine Structure

An engine 20 and a transmission case (not shown) that accommodates a belt-type continuously variable transmission mechanism are integrated in the unit swing engine 13. The rear wheel 3 is rotatably supported by a rear end portion of the transmission case. The unit swing engine 13 is coupled to a rear portion of the main frame 15 via a pivot shaft 21 provided in a front portion of the unit swing engine 13 and is swingable up and down around the pivot shaft 21. That is, the unit swing engine 13 also functions as a swing arm that supports the rear wheel 3.

A rear suspension 22 is provided between a rear portion of the unit swing engine 13 and a rear portion of the vehicle body frame 12.

An exhaust pipe 23 of the engine 20 is drawn out from a cylinder head (not shown) and extends rearwards and is coupled to a muffler 24 on a right side of the rear wheel 3.

### Structure around Seat

An accommodation box 25 is provided above the engine 20 and is supported by the seat frame. The accommodation box 25 is capable of accommodating articles such as a helmet. The accommodation box 25 is formed in a box shape with an opening on an upper surface. The opening is closed by the seat 10.

The seat 10 is coupled to a front end portion of the accommodation box 25 via a hinge portion 25a at a front end portion of the seat 10. Accordingly, the accommodation box 25 is opened and closed by rotating the seat 10 around the hinge portion 25a. In a state where the seat 10 closes the accommodation box 25, the seat 10 is locked by a seat locking mechanism (not shown) provided at a rear portion of the accommodation box 25.

The seat 10 integrally includes a front seat 10a on which a driver (or an occupant) sits and a rear seat 10b on which a passenger sits.

### Vehicle Cover Structure

The motorcycle 1 includes a cover 26 that is formed of a resin and covers the vehicle body frame 12 and the like. The cover 26 includes: an upper cover 27 that covers a central portion of the handle 19, a leg shield 29 that is an example of a vehicle body cover and covers the head pipe 14 from a front side and a rear side of the head pipe 14 and covers a vehicle body frontwards of legs of a driver who sits on the front seat 10a; the step floor 11; an under cover 30 that covers the main frame 15 from a lower side; and a rear cover 7 that covers left and right sides of the accommodation box 25.

The motorcycle 1 further includes a front fender 4 that covers the front wheel 2 from above and a rear fender 5 that covers the rear wheel 3 from above.

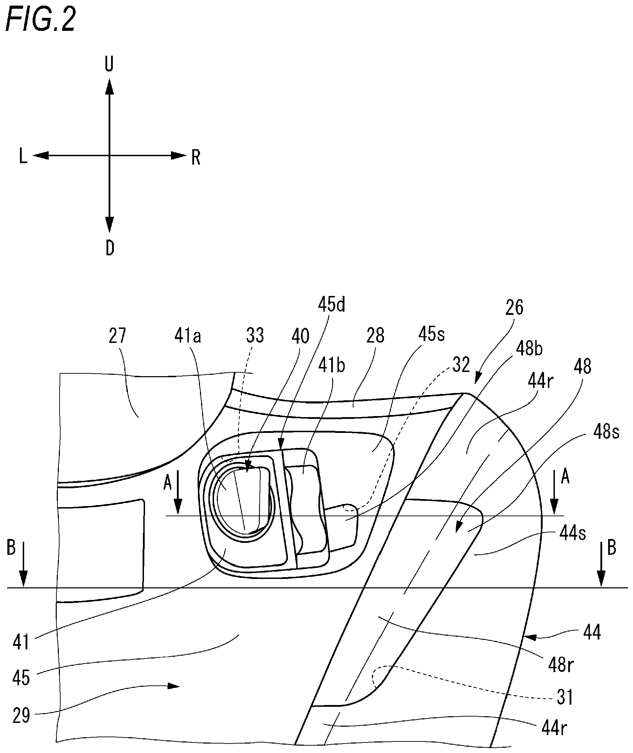

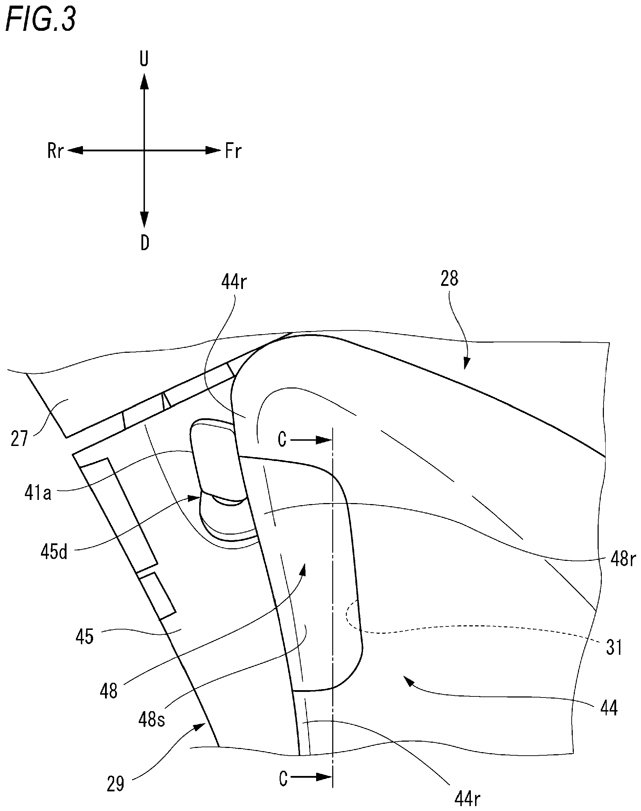

As shown in Figs. 2 and 3, the leg shield 29 includes a front cover 28 that covers the head pipe 14 from the front side of the head pipe 14, an upper center cover 45 that covers the head pipe 14 from the rear side of the head pipe 14, an inner cover 46 that covers the down frame portion 15a from a rear side, and a pair of left and right front side covers 44 (only the right front side cover 44 is shown) that extend in an upper-lower direction to cover left and right sides of the head pipe 14 and the down frame portion 15a. The pair of left and right front side covers 44 extend from a vicinity of an upper end of the head pipe 14 to a vicinity of a lower end of the down frame portion 15a, and are positioned rearwards of the front wheel 2.

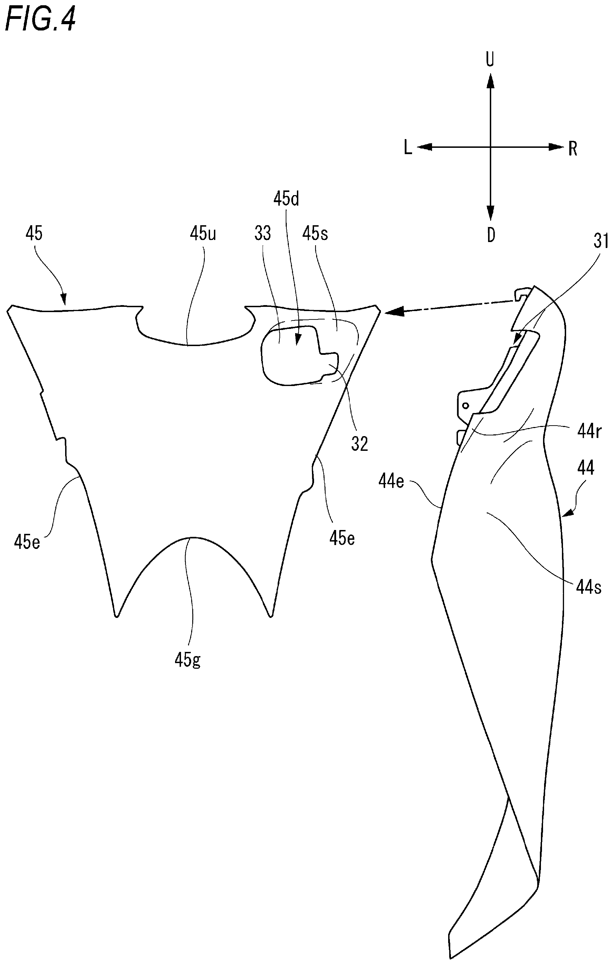

A first opening 31 (see Fig. 4; described later) is provided on a right upper end portion of the leg shield 29. A lid 48 that covers the first opening 31 is detachably attached.

As shown in Fig. 4, the upper center cover 45 is formed such that a distance between left and right outer edges 45e of the upper center cover 45 is tapered downwards in a rear view. A lower edge 45g of the upper center cover 45 has a curved shape formed by cutting out a lower portion along a shape of the inner cover 46. An upper edge 45u of the upper center cover 45 has a curved shape formed by cutting out an upper portion along a shape of the upper cover 27 that covers the central portion of the handle 19.

A recess 45d is formed on a right side of the upper edge 45u of the upper center cover 45 and recessed towards a front side of the vehicle when the upper center cover 45 is viewed from a rear side of the vehicle (see Figs. 2 and 3). A substantially rectangular second opening 32 and a third opening 33 are formed in the recess 45d. The third opening 33 is formed on a bottom surface of the recess 45d. The second opening 32 is formed on a second appearance surface 45s extending from the bottom surface of the recess 45d towards the right outer edge 45e of the upper center cover 45. A left edge of the second opening 32 is continuous with a right edge of the third opening 33. The second opening 32 is smaller than the third opening 33.

The second opening 32 is an opening through which an operation surface 48b of the lid 48 (described later) is exposed to a surface of the upper center cover 45 (see Fig. 2).

The third opening 33 is an opening through which a main switch knob 41a and a seat unlock button 41b are exposed to a surface of the vehicle body cover (see Fig. 2). The main switch knob 41a and the seat unlock button 41b are operation units of a lock module 41 (described later).

The pair of left and right front side covers 44 (only the right front side cover 44 is shown) include a first appearance surface 44s that is curved to expand slightly in a left-right direction. Inner edges 44e of the front side covers 44 are coupled to the left and right edges 45e of the upper center cover 45 such that the front side covers 44 are attached to the vehicle body. The inner edge 44e of the front side cover 44 includes an edge portion that is a portion below a middle part of the inner edge 44e in the upper-lower direction and is continuous with the lower edge 45g of the upper center cover 45. The inner edge 44e of the front side cover 44 is coupled to the inner cover 46.

A ridge portion 44r is bent from the first appearance surface 44s and is coupled to the outer edge 45e of the upper center cover 45. The ridge portion 44r is formed on an upper portion of the inner edge 44e of the front side cover 44. The ridge portion 44r forms a ridge line between the first appearance surface 44s of the front side cover 44 and the upper center cover 45.

The right front side cover 44 has the first opening 31 at a position crossing the ridge portion 44r. The first opening 31 is formed at a position separated from a right side of the second opening 32 by a predetermined distance.

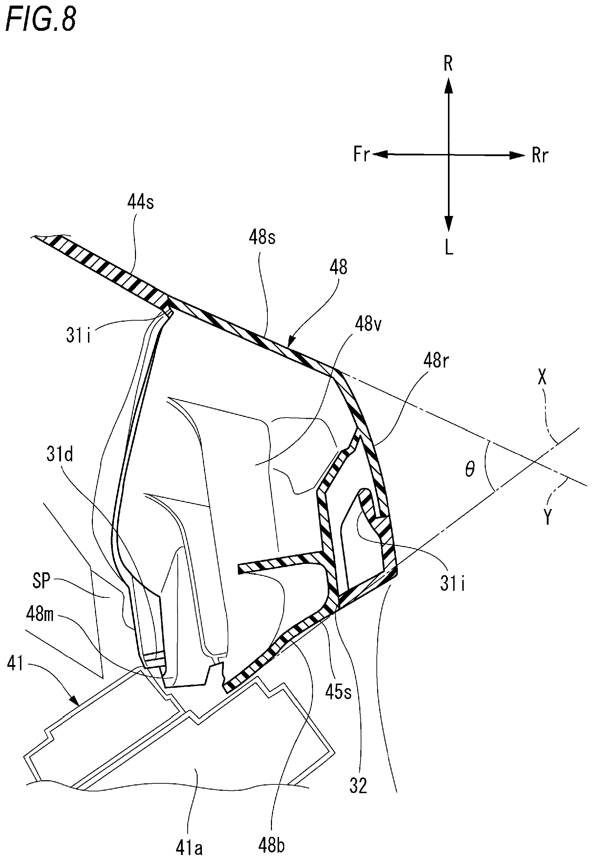

As shown in Fig. 8, the first appearance surface 44s of the front side cover 44 and the second appearance surface 45s of the upper center cover 45 are formed to sandwich the ridge portion 44r and are formed as surfaces inclined at a predetermined angle. Accordingly, a space SP is formed between the first appearance surface 44s and the second appearance surface 45s. The space SP forms an inner side of a cover in which the lock module 41 and the like are provided.

Accordingly, the first appearance surface 44s and the second appearance surface 45s can be provided such that an angle θ formed between the first appearance surface 44s and the second appearance surface 45s is a predetermined angle with a simple structure. Specifically, the angle θ formed between the first appearance surface 44s and the second appearance surface 45s is an angle formed between a first virtual line X that is a tangent line at a boundary between the first appearance surface 44s and the first opening 31 and a second virtual line Y that is a tangent line at a boundary between the second appearance surface 45s and the second opening 32.

The angle θ formed between the first appearance surface 44s and the second appearance surface 45s is an acute angle.

### Smart Key System

As shown in Figs. 2 and 3, a smart key system 40 using the lock module 41 is attached in the third opening 33.

The smart key system 40 can start the engine 20 and lock or unlock the accommodation box 25 without using a mechanical key in the motorcycle 1. That is, the smart key system 40 includes an actuator (not shown) that operates in response to a signal from the lock module 41, a seat locking mechanism (not shown), and an operation cable (not shown) that connects the seat locking mechanism and the actuator. The smart key system 40 includes a portable key (not shown) that has an identification code (ID) and transmits the ID by wireless communication or the like, and the lock module 41 that authenticates the received ID of the portable key is provided so as to close the third opening 33.

The lock module 41 supports the main switch knob 41a and the seat unlock button 41b to protrude in the recess 45d. The lock module 41 is coupled to an ECU (not shown) that controls the engine 20 or an electrical component.

The lock module 41, the ECU, and the actuator are driven by electric power from a battery (not shown) mounted in the motorcycle 1. For example, the battery is provided in a vicinity of the accommodation box 25 such that the battery can be accessed from an inner side of the accommodation box 25 in a state where the accommodation box 25 is opened.

Only when the lock module 41 authenticates that the ID received from the portable key is valid, the lock module 41 unlocks the main switch knob 41a. An occupant operates the unlocked main switch knob 41a to start the engine 20.

When an occupant operates the seat unlock button 41b, the lock module 41 authenticates the ID of the portable key. Only when the ID is valid, the actuator operates to unlock the seat locking mechanism via the operation cable. In this manner, when the ID of the portable key carried by the occupant is authenticated by the lock module 41, the occupant can start the engine 20 and lock or unlock the accommodation box 25 without using a mechanical key.

### Lid Structure and Lid Support Structure

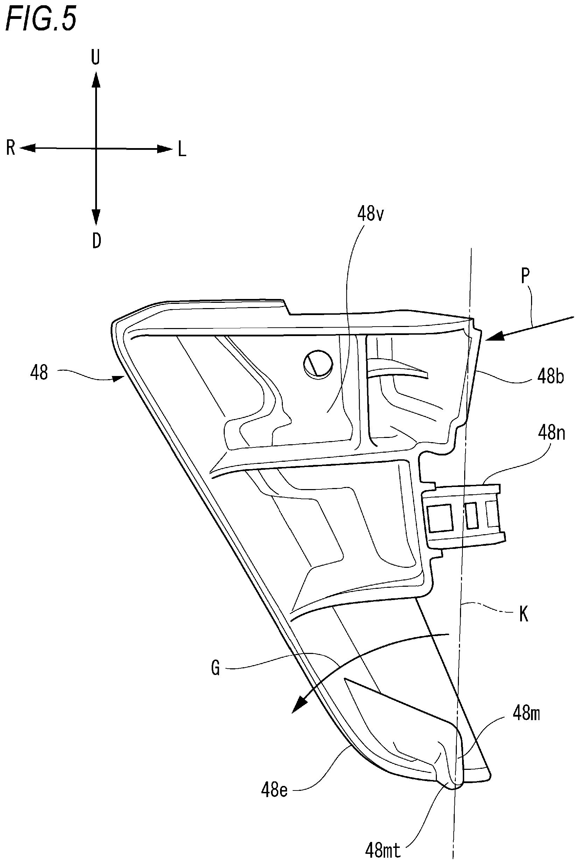

As shown in Figs. 5 to 7, the lid 48 includes a lid surface 48s that closes the first opening 31 and the operation surface 48b that is operable through the second opening 32.

The lid 48 includes an inner rib 48v protruding from a plate portion that forms the lid surface 48s towards the space SP formed between the first appearance surface 44s and the second appearance surface 45s. The operation surface 48b is formed at a tip end of the inner rib 48v.

Accordingly, the first appearance surface 44s and the second appearance surface 45s are provided such that the angle formed between the first appearance surface 44s and the second appearance surface 45s is a predetermined angle, and the space SP between the first appearance surface 44s and the second appearance surface 45s forms an inner side of the leg shield 29. Therefore, the lid surface 48s and the operation surface 48b of the lid 48 are easily coupled inside the leg shield 29, and a lid support structure in which the lid 48 has superior attachability and detachability from the leg shield 29 can be provided without deteriorating the design with a simple structure.

The lid surface 48s includes a lid ridge portion 48r that is continuous with the ridge portion 44r (see Figs. 2 and 3) of the front side cover 44. A first engaging portion 48m is provided at a lower end of an outer edge 48e of the lid surface 48s to extend downwards.

A second engaging portion 48n is provided on the inner rib 48v between the operation surface 48b and the first engaging portion 48m. The second engaging portion 48n protrudes substantially rearwards in a vertical direction with respect to the operation surface 48b.

Therefore, the operation surface 48b, the first engaging portion 48m, and the second engaging portion 48n are aligned along a virtual straight line K shown in Figs. 5 to 7.

As shown in Fig. 8, a stepped portion 31i is recessed towards an inner side of the cover by the thickness of a plate that forms the lid surface 48s and is provided on a peripheral edge of the first opening 31. Therefore, the lid surface 48s forms a same surface that is flat without a step with the first appearance surface 44s and the ridge portion 44r of the front side cover 44.

The operation surface 48b is provided to close the second opening 32 and on the same surface with the second appearance surface 45s of the upper center cover 45.

Accordingly, the operation surface 48b can be inconspicuous and can be provided without deteriorating the design around the operation surface 48b.

Since the second opening 32 is formed in the recess 45d provided on the vehicle rear surface of the leg shield 29, the operation surface 48b can be provided at a position where the operation surface 48b is less likely to be seen from an outer side of the saddle-type vehicle, and the operation surface 48b can be provided without deteriorating the design of the saddle-type vehicle.

The operation surface 48b may not be formed on the same surface with the second appearance surface 45s of the upper center cover 45 as long as the operation surface 48b can be operated through the second opening 32.

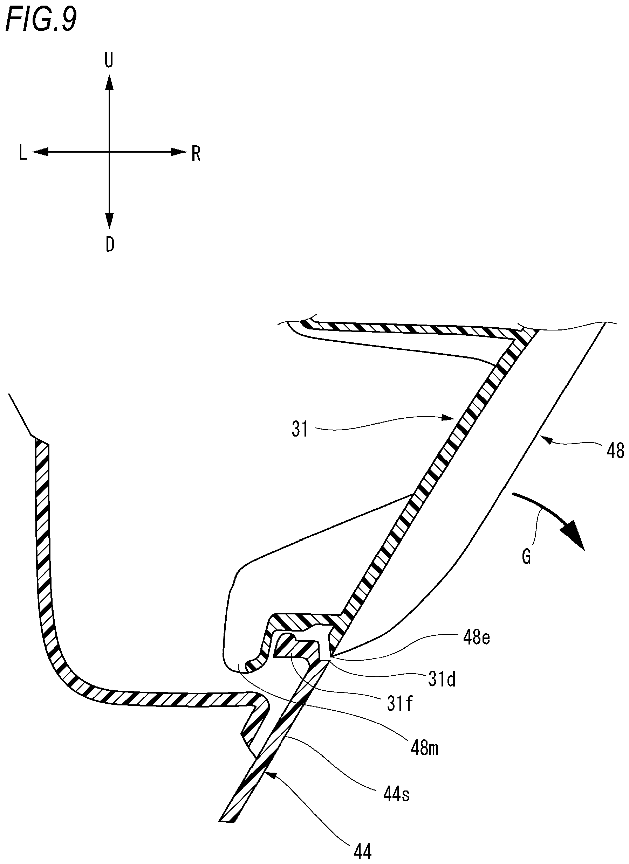

As shown in Fig. 9, the first engaging portion 48m is engaged with a first locking portion 31f provided inwards of an opening lower end portion 31d of the first opening 31 in a state where the lid 48 is attached.

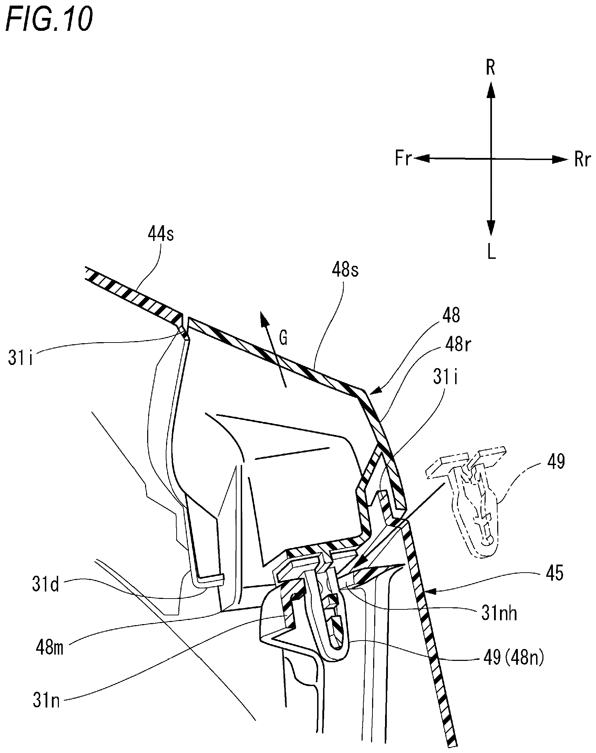

As shown in Fig. 10, the second engaging portion 48n is locked by being inserted into an engaging hole 31nh of a second locking portion 31n in a state where the lid 48 is attached to the leg shield 29. The second engaging portion 48n is implemented by a snap fit 49. That is, the snap fit 49 has a shape that is easily elastically deformed in a thickness direction of the snap fit 49 (a radial direction of the engaging hole 31nh). Accordingly, the snap fit 49 is easily engaged with or detached from the engaging hole 31nh.

### Lid Attaching and Detaching Operation

An attaching and detaching operation of the lid 48 will be described below.

When the lid 48 is to be detached from the leg shield 29, the operation surface 48b is pushed in a direction indicated by an arrow P (see Figs. 5 and 8). The operation surface 48b is moved to the space SP formed between the first appearance surface 44s and the second appearance surface 45s by such a pushing operation. The snap fit 49 is rotated in a direction (a direction indicated by an arrow G) away from the engaging hole 31nh with the first engaging portion 48m serving as a rotation fulcrum by such a movement of the operation surface 48b. As a result, the lid 48 is detached from the first opening 31.

When the lid 48 is to be attached to the leg shield 29, the first engaging portion 48m is hooked by the first locking portion 31f and the snap fit 49 is pushed into the engaging hole 31nh (in a direction opposite to the direction indicated by the arrow G) such that the lid 48 can be attached to the leg shield 29.

In this manner, the operation surface 48b used for detaching the lid 48 from the leg shield 29 can be provided at a position away from the lid surface 48s that closes the first opening 31 of the leg shield 29. Accordingly, the lid support structure in which the lid 48 has superior attachability and detachability from the leg shield 29 can be provided without deteriorating the design around the first opening 31 of the leg shield 29 and the lid surface 48s of the lid 48.

Since the first appearance surface 44s and the second appearance surface 45s are provided such that the angle θ formed between the first appearance surface 44s and the second appearance surface 45s is an acute angle, the operation surface 48b of the lid 48 can be disengaged from the leg shield 29 by pushing the operation surface 48b of the lid 48 towards an inner side of the leg shield 29 with a simple structure.

Since the second engaging portion 48n is provided between the operation surface 48b and the first engaging portion 48m inside the leg shield 29, the operation surface 48b serves as a leverage point, the first engaging portion 48m serves as a fulcrum, and the second engaging portion 48n serves as an action point when the operation surface 48b of the lid 48 is pushed towards the inner side of the leg shield 29. However, the leverage point can be provided at a position farther than the action point, and the lid 48 can be detached from the leg shield 29 using a small force according to a lever principle.

Since the second engaging portion 48n of the lid 48 is the snap fit 49 that is directed to be disengaged from the leg shield 29 by pushing the operation surface 48b towards the inner side of the leg shield 29, the lid 48 that is detachably engaged with the leg shield 29 can be formed with a simple structure.

Although the embodiment of the present invention has been described above, the present invention is not limited to the above-described embodiment, and modifications, improvements, or the like can be made as appropriate.

For example, the second engaging portion 48n is implemented by the snap fit 49 in the present embodiment. Alternatively, the second engaging portion 48n may not be implemented by the snap fit 49.

For example, the motorcycle is described in the present embodiment. Alternatively, the present invention may be applied to another saddle-type vehicle such as a buggy.

At least the following features are described in the present specification. Corresponding components in the above embodiment are shown in parentheses. However, the present invention is not limited thereto. The scope of the present invention is defined by the appended claims.
(1) A lid support structure includes:
   a vehicle body cover (the leg shield 29) including a first opening (the first opening 31) and a second opening (the second opening 32); and
   a lid (the lid 48) configured to be detachably engaged with the vehicle body cover,
   wherein the lid includes:
      a lid surface (the lid surface 48s) configured to close the first opening of the vehicle body cover, and
      an operation surface (the operation surface 48b) disposed to be operable through the second opening of the vehicle body cover, and
   wherein the lid is configured to be disengaged from the vehicle body cover by moving the operation surface.
   According to (1), since the operation surface used for disengaging the lid from the vehicle body cover is provided at a position separated from the lid surface that closes the first opening of the vehicle body cover, the lid having superior attachability and detachability from the vehicle body cover can be provided without deteriorating the design around the first opening of the vehicle body cover and the lid surface of the lid.
(2) In the lid support structure according to (1),
   the vehicle body cover includes a first appearance surface (the first appearance surface 44s) provided with at least a part of the first opening, and a second appearance surface (the second appearance surface 45s) provided with at least a part of the second opening,
   the first appearance surface and the second appearance surface are provided such that an angle (the angle θ) formed between the first appearance surface and the second appearance surface is a predetermined angle. A space (the space SP) between the first appearance surface and the second appearance surface forms an inner side of the vehicle body cover.
   According to (2), since the first appearance surface and the second appearance surface of the vehicle body cover are provided such that the angle formed between the first appearance surface and the second appearance surface is a predetermined angle, and the space between the first appearance surface and the second appearance surface forms the inner side of the vehicle body cover, the lid surface and the operation surface of the lid are easily coupled inside the vehicle body cover, and the lid having superior attachability and detachability from the vehicle body cover can be provided without deteriorating the design with a simple structure.
(3) In the lid support structure according to (2),
   the vehicle body cover includes a ridge portion (the ridge portion 44r), and
   the first appearance surface and the second appearance surface are formed to extend while sandwiching the ridge portion.
   According to (3), since the first appearance surface and the second appearance surface are formed to extend while sandwiching the ridge portion, the first appearance surface and the second appearance surface can be provided such that the angle formed between the first appearance surface and the second appearance surface is the predetermined angle with a simple structure.
(4) In the lid support structure according to (2) or (3),
   the first appearance surface and the second appearance surface are provided such that the angle formed between the first appearance surface and the second appearance surface is an acute angle.
   According to (4), since the first appearance surface and the second appearance surface are provided such that the angle formed between the first appearance surface and the second appearance surface is an acute angle, the operation surface of the lid can be disengaged from the vehicle body cover by pushing the operation surface of the lid towards the inner side of the vehicle body cover with a simple structure.
(5) In the lid support structure according to any one of (1) to (4),
   the operation surface of the lid is provided to close the second opening of the vehicle body cover and on the same surface with an appearance surface of the vehicle body cover.
   According to (5), since the operation surface of the lid is provided to close the second opening of the vehicle body cover and on the same surface with the appearance surface of the vehicle body cover, the operation surface can be inconspicuous and can be provided without deteriorating the design around the operation surface.
(6) In the lid support structure according to any one of (1) to (5),
   the vehicle body cover is a leg shield positioned frontwards of legs of an occupant on a saddle-type vehicle,
   a vehicle rear surface of the leg shield is provided with a recess (the recess 45d) in which an operation unit (including the main switch knob 41a and the seat unlock button 41b) used for operating the saddle-type vehicle is provided, and
   the second opening is formed in the recess.
   According to (6), since the second opening is formed in the recess that is provided on the vehicle rear surface of the leg shield, the operation surface can be provided at a position where the operation surface is less likely to be seen from an outer side of the saddle-type vehicle, and the operation surface can be provided without deteriorating the design of the saddle-type vehicle.
(7) In the lid support structure according to any one of (1) to (6),
   the lid includes a first engaging portion (the first engaging portion 48m) and a second engaging portion (the second engaging portion 48n), both being configured to engage with the vehicle body cover,
   the first engaging portion is provided on an outer edge (the outer edge 48e) of the lid surface and configured to engage with the first opening of the vehicle body cover, and
   the second engaging portion is a snap fit (the snap fit 49) that is directed to be disengaged from the vehicle body cover by pushing the operation surface towards the inner side of the vehicle body cover.
   According to (7), since the second engaging portion of the lid is the snap fit that is directed to be disengaged from the vehicle body cover by pushing the operation surface towards the inner side of the vehicle body cover, the lid that is detachably engaged with the vehicle body can be provided with a simple structure.
(8) In the lid support structure according to (7),
   the second engaging portion is provided between the operation surface and the first engaging portion inside the vehicle body cover.
   According to (8), since the second engaging portion is provided between the operation surface and the first engaging portion inside the vehicle body cover, the operation surface serves as a leverage point, the first engaging portion serves as a fulcrum, and the second engaging portion serves as an action point when the operation surface of the lid is pushed towards the inner side of the vehicle body cover. The leverage point can be provided at a position farther than the action point, so that the lid can be detached from the vehicle body cover using a small force according to a lever principle.
   A lid support structure includes a vehicle body cover (29) including a first opening (31) and a second opening (32), and a lid (48) configured to be detachably engaged with the vehicle body cover (29). The lid (48) includes a lid surface (48s) configured to close the first opening (31) of the vehicle body cover (29), and an operation surface (48b) disposed to be operable through the second opening (32) of the vehicle body cover (29). The lid (48) is configured to be disengaged from the vehicle body cover (29) by moving the operation surface (48b).

## Claims

1. A lid support structure for a saddle-type vehicle comprising:
a vehicle body cover (29) including a first opening (31) and a second opening (32); and
a lid (48) configured to be detachably engaged with the vehicle body cover (29),
wherein the lid (48) includes:
a lid surface (48s) configured to close the first opening (31) of the vehicle body cover (29); and
an operation surface (48b) disposed to be operable through the second opening (32) of the vehicle body cover (29), and
wherein the lid (48) is configured to be disengaged from the vehicle body cover (29) by moving the operation surface (48b),
**characterized in that** the vehicle body cover (29) includes a first appearance surface (44s) provided with at least a part of the first opening (31), and a second appearance surface (45s) provided with at least a part of the second opening (32),
wherein the first appearance surface (44s) and the second appearance surface (45s) are provided such that an angle formed between the first appearance surface (44s) and the second appearance surface (45s) is a predetermined angle, and
wherein a space between the first appearance surface (44s) and the second appearance surface (45s) forms an inner side of the vehicle body cover (29), and
the lid (48) includes an inner rib (48v) protruding from a plate portion that forms the lid surface (48s) towards a space (SP) formed between the first appearance surface (44s) and the second appearance surface (45s), wherein the operation surface (48b) is formed at the tip end of the inner rib (48v).

2. The lid support structure according to claim 1,
wherein the vehicle body cover (29) further includes a ridge portion (44r), and
wherein the first appearance surface (44s) and the second appearance surface (45s) are formed to extend from the ridge portion (44r).

3. The lid support structure according to claim 1 or 2,
wherein the first appearance surface (44s) and the second appearance surface (45s) are provided such that the angle formed between the first appearance surface (44s) and the second appearance surface (45s) is an acute angle.

4. The lid support structure according to any one of claims 1 to 3,
wherein the operation surface (48b) of the lid (48) is provided to close the second opening (32) of the vehicle body cover (29) and on a same surface with an appearance surface of the vehicle body cover (29).

5. The lid support structure according to any one of claims 1 to 4,
wherein the vehicle body cover (29) is a leg shield (29) positioned frontwards of legs of an occupant on a saddle-type vehicle,
wherein a rear surface of the leg shield (29) is provided with a recess (45d) in which an operation unit (41a, 41b) configured to operate the saddle-type vehicle is provided, and
wherein the second opening (32) is formed in the recess (45d).

6. The lid support structure according to any one of claims 1 to 5,
wherein the lid (48) includes a first engaging portion (48m) and a second engaging portion (48n), both being configured to engage with the vehicle body cover (29),
wherein the first engaging portion (48m) is provided on an outer edge (48e) of the lid surface (48s) and configured to engage with the first opening (31) of the vehicle body cover (29), and
wherein the second engaging portion (48n) is a snap fit (49) that is directed to be disengaged from the vehicle body cover (29) by pushing the operation surface (48b) towards the inner side of the vehicle body cover (29).

7. The lid support structure according to claim 6,
wherein the second engaging portion (48n) is provided between the operation surface (48b) and the first engaging portion (48m) inside the vehicle body cover (29).

## Patentansprüche

1. Deckeltragstruktur für ein sattelartiges Fahrzeug, welche aufweist:
eine Fahrzeugrumpfabdeckung (29), die eine erste Öffnung (31) und eine zweite Öffnung (32) enthält; und
einen Deckel (48), der zum lösbaren Eingriff mit der Fahrzeugrumpfabdeckung (29) konfiguriert ist,
wobei der Deckel (48) enthält:
eine Deckeloberfläche (48s), die konfiguriert ist, um die erste Öffnung (31) der Fahrzeugrumpfabdeckung (29) zu verschließen; und
eine Bedienungsoberfläche (48b), die durch die zweite Öffnung (32) der Fahrzeugrumpfabdeckung (29) hindurch betätigbar ist, und
wobei der Deckel (48) konfiguriert ist, um durch Bewegung der Bedienungsoberfläche (48b) von der Fahrzeugrumpfabdeckung (29) gelöst zu werden,
**dadurch gekennzeichnet,**
**dass** die Fahrzeugrumpfabdeckung (29) eine erste Sichtoberfläche (44s) enthält, die mit zumindest einem Teil der ersten Öffnung (31) versehen ist, sowie eine zweite Sichtoberfläche (45s), die mit zumindest einem Teil der zweiten Öffnung (32) versehen ist,
wobei die erste Sichtoberfläche (44s) und die zweite Sichtoberfläche (45s) derart vorgesehen sind, dass ein zwischen der ersten Sichtoberfläche (44s) und der zweiten Sichtoberfläche (45s) gebildeter Winkel ein vorbestimmter Winkel ist, und
wobei ein Raum zwischen der ersten Sichtoberfläche (44s) und der zweiten Sichtoberfläche (45s) eine Innenseite der Fahrzeugrumpfabdeckung (29) bildet, und
der Deckel (48) eine innere Rippe (48v) enthält, die von einem die Deckeloberfläche (48s) bildenden Plattenabschnitt zu einem Raum (SP) vorsteht, der zwischen der ersten Sichtoberfläche (44s) und der zweiten Sichtoberfläche (45s) gebildet ist, wobei die Bedienungsoberfläche (48b) an der Endspitze der inneren Rippe (48v) ausgebildet ist.

2. Die Deckeltragstruktur nach Anspruch 1,
wobei die Fahrzeugrumpfabdeckung (29) ferner einen Leistenabschnitt (44r) enthält, und
wobei die erste Sichtoberfläche (44s) und die zweite Sichtoberfläche (45s) so ausgebildet sind, dass sie sich von dem Leistenabschnitt (44r) weg erstrecken.

3. Die Deckeltragstruktur nach Anspruch 1 oder 2,
wobei die erste Sichtoberfläche (44s) und die zweite Sichtoberfläche (45s) derart vorgesehen sind, dass der zwischen der ersten Sichtoberfläche (44s) und der zweiten Sichtoberfläche (45s) gebildete Winkel ein spitzer Winkel ist.

4. Die Deckeltragstruktur nach einem der Ansprüche 1 bis 3,
wobei die Bedienungsoberfläche (48b) des Deckels (48) zum Verschließen der zweiten Öffnung (32) der Fahrzeugrumpfabdeckung (29), und auf der gleichen Oberfläche mit einer Sichtoberfläche der Fahrzeugrumpfabdeckung (29) vorgesehen ist.

5. Die Deckeltragstruktur nach einem der Ansprüche 1 bis 4,
wobei die Fahrzeugrumpfabdeckung (29) ein Beinschild (29) ist, das vor Beinen eines Fahrers auf einem sattelartigen Fahrzeug positioniert ist,
wobei eine Rückseite des Beinschilds (29) mit einer Vertiefung (45d) versehen ist, in der eine Bedienungseinheit (41a, 41b) vorgesehen ist, die zum Bedienen des sattelartigen Fahrzeugs konfiguriert ist, und
wobei die zweite Öffnung (32) in der Vertiefung (45d) ausgebildet ist.

6. Die Deckeltragstruktur nach einem der Ansprüche 1 bis 5,
wobei der Deckel (48) einen ersten Eingriffsabschnitt (48m) und einen zweiten Eingriffsabschnitt (48n) enthält, die beide konfiguriert sind, um mit der Fahrzeugrumpfabdeckung (29) in Eingriff zu treten,
wobei der erste Eingriffsabschnitt (48m) an einem Außenrand (48e) der Deckeloberfläche (48s) vorgesehen und konfiguriert ist, um mit der ersten Öffnung (31) der Fahrzeugrumpfabdeckung (29) in Eingriff zu treten, und
wobei der zweite Eingriffsabschnitt (48n) ein Schnappsitz (49) ist, der, durch Drücken der Bedienungsoberfläche (48e) zu der Innenseite der Fahrzeugrumpfabdeckung (29) hin, zum Lösen von der Fahrzeugrumpfabdeckung (29) aus gerichtet ist.

7. Die Deckeltragstruktur nach Anspruch 6,
wobei der zweite Eingriffsabschnitt (48n) zwischen der Bedienungsoberfläche (48b) und dem ersten Eingriffsabschnitt (48m) innerhalb der Fahrzeugrumpfabdeckung (29) vorgesehen ist.

## Revendications

1. Structure de support de couvercle pour véhicule de type à selle comprenant :
un cache de carrosserie de véhicule (29) comportant une première ouverture (31) et une deuxième ouverture (32) ; et
un couvercle (48) configuré pour être mis en prise de manière amovible avec le cache de carrosserie de véhicule (29),
dans laquelle le couvercle (48) comporte :
une surface de couvercle (48s) configurée pour fermer la première ouverture (31) du cache de carrosserie de véhicule (29) ; et
une surface d'actionnement (48b) disposée pour pouvoir être actionnée à travers la deuxième ouverture (32) du cache de carrosserie de véhicule (29), et
dans laquelle le couvercle (48) est configuré pour être désolidarisé du cache de carrosserie de véhicule (29) en déplaçant la surface d'actionnement (48b),
**caractérisée en ce que** le cache de carrosserie de véhicule (29) comporte une première surface d'aspect (44s) pourvue d'au moins une partie de la première ouverture (31), et une deuxième surface d'aspect (45s) pourvue d'au moins une partie d'une deuxième ouverture (32),
dans laquelle la première surface d'aspect (44s) et la deuxième surface d'aspect (45s) sont disposées de telle sorte qu'un angle formé entre la première surface d'aspect (44s) et la deuxième surface d'aspect (45s) est un angle prédéterminé, et
dans laquelle un espace entre la première surface d'aspect (44s) et la deuxième surface d'aspect (45s) forme un côté intérieur du cache de carrosserie de véhicule (29), et
le couvercle (48) comporte une nervure intérieure (48v) faisant saillie depuis une portion plaque qui forme la surface de couvercle (48s) vers un espace (SP) formé entre la première surface d'aspect (44s) et la deuxième surface d'aspect (45s), dans laquelle la surface d'actionnement (48b) est formée au niveau de l'extrémité de pointe de la nervure intérieure (48v).

2. Structure de support de couvercle selon la revendication 1,
dans laquelle le cache de carrosserie de véhicule (29) comporte en outre une portion arête (44r), et
dans laquelle la première surface d'aspect (44s) et la deuxième surface d'aspect (45s) sont formées pour s'étendre depuis la portion arête (44r).

3. Structure de support de couvercle selon la revendication 1 ou 2,
dans laquelle la première surface d'aspect (44s) et la deuxième surface d'aspect (45s) sont disposées de telle sorte que l'angle formé entre la première surface d'aspect (44s) et la deuxième surface d'aspect (45s) est un angle aigu.

4. Structure de support de couvercle selon l'une quelconque des revendications 1 à 3,
dans laquelle la surface d'actionnement (48b) du couvercle (48) est disposée pour fermer la deuxième ouverture (32) du cache de carrosserie de véhicule (29) et sur une même surface avec une surface d'aspect du cache de carrosserie de véhicule (29).

5. Structure de support de couvercle selon l'une quelconque des revendications 1 à 4,
dans laquelle le cache de carrosserie de véhicule (29) est un protège-jambes (29) positionné devant les jambes d'un occupant sur un véhicule de type à selle,
dans laquelle une surface arrière du protège-jambes (29) est pourvue d'un renfoncement (45d) dans lequel est disposée une unité d'actionnement (41a, 41b) configurée pour actionner le véhicule de type à selle, et
dans laquelle la deuxième ouverture (32) est formée dans le renfoncement (45d).

6. Structure de support de couvercle selon l'une quelconque des revendications 1 à 5,
dans laquelle le couvercle (48) comporte une première portion de mise en prise (48m) et une deuxième portion de mise en prise (48n), toutes deux étant configurées pour venir en prise avec le cache de carrosserie de véhicule (29),
dans laquelle la première portion de mise en prise (48m) est disposée sur un bord extérieur (48e) de la surface de couvercle (48s) et configurée pour venir en prise avec la première ouverture (31) du cache de carrosserie de véhicule (29), et
dans laquelle la deuxième portion de mise en prise (48n) est un encliquetage (49) qui est dirigé pour être désolidarisé du cache de carrosserie de véhicule (29) en poussant la surface d'actionnement (48b) vers le côté intérieur du cache de carrosserie de véhicule (29).

7. Structure de support de couvercle selon la revendication 6,
dans laquelle la deuxième portion de mise en prise (48b) est disposée entre la surface d'actionnement (48b) et la première portion de mise en prise (48m) à l'intérieur du cache de carrosserie de véhicule (29).
